# EUROPEAN PATENT SPECIFICATION

(11) **EP 3 350 493 B1**
(45) Date of publication and mention of the grant of the patent: **01.05.2019**
(21) Application number: 16770730.6
(22) Date of filing: 16.09.2016
(51) Int. Cl.: F16L 1/12, F16L 57/00, F16L 57/02

(54) **BEND RESTRICTOR**
BIEGEBEGRENZER
LIMITEUR DE COURBURE

(30) Priority: 16.09.2015 NO 20151201
(43) Date of publication of application: 25.07.2018
(73) Proprietor: Macgregor Norway AS, 4623 Kristiansand (NO)
(72) Inventor: ALBRIGTSEN, Rolf, N-4879 Grimstad (NO); HØVIK, Jon, N-48418 Færvik (NO)
(74) Representative: Onsagers AS
(86) International application number: PCT/EP2016/071982
(87) International publication number: WO 2017/046336

(56) References cited:
- WO-A1-02/19851
- WO-A1-2014/122122
- WO-A1-2014/122159
- US-A1- 2010 263 111
- US-B1- 6 352 115

## Description

The invention concerns a bend restrictor for preventing an elongated member from reaching a radius less than the allowable bending radius of the elongated member.

### Background of the invention

Bend restrictors are used for preventing reaching a radius less than the allowable bending radius of an elongated member such as flexible conduits, cables, umbilicals and flow lines and the bend restrictors, as situations may arise where the elongated member may endure critical bending forces. A bend restrictor is made up by a structure configured to restrict the bending of the elongated member by provisions thereby determining the minimum bending radius of elongated member. Prior art solutions disclose various bend restrictors:
US 2010/0228295 shows a bend restrictor which is formed of plural vertebras which are connected to each other by a ball and ball receiver arrangement. A ball portion of one vertebra is accommodated in a ball receiving portion of an adjacent vertebra, and the individual ball portion may be adjusted angularly relative to the ball receiving portion to adjust the bending radius of the bend restrictor. A central passage for accommodation of the flexible conduit is arranged in each vertebra for the flexible conduit to pass through the continuous chain of plural vertebras.

The bend restrictor of US 2010/0228295 is a closed system which fully surrounds the flexible conduit and thus this solution makes the inspection of flexible conduit inside the bend restrictor quite cumbersome. Also surveillance for prediction of ice behaviour is complicated to carry out. The solution of US 2010/0228295 allows rotating the cord lengths of each vertebra around the centre of rotation of the flexible conduit initial rectilinear part. In certain applications it may be a drawback of the bend restrictor of US 2010/0228295 that the connection between the vertebras is limiting the movement equally in all circumferential directions and that the connection is unavailable for inspection.

WO 2010/136801 discloses a bend restrictor similar to the one shown in US 2010/0228295. The bend restrictor of WO 2010/136801 is made up by plural vertebras connected to each other by male/female connection and a longitudinal cavity is arranged through the vertebras for accommodation of the flow line. Further EP 2503093 discloses a bend restrictor for a pipe or cable and comprises plural inflexible elements which are coupled with flexible elements in order to obtain control of the bending of the pipe when installed around the pipe.

WO 2008/088550 is a bend restrictor for a fixed, not variable cable connector which is open to the surroundings only in the bend spherical half facing outwards in the bending.

WO 2014/122122 discloses a hose guide and support structure with a bending restriction part with a curvature providing the hose end with a curve to avoid damage on the hose.

The prior art solutions describe bend restrictors that are provided by closed structures and semi opened structures which have central passages for accommodation of a hose. The closed structure makes the periodical inspections cumbersome to carry out and the ice build up it is also hard to predict by the use of these solutions. Further in accordance with the prior art solutions, the restrictions for critical bending of the elongated member in semi opened structures is permanently fixed by the geometry.

Based on the prior art solution a need has evoked for providing a bending restrictor for an elongated member having one end attached to a connection arrangement in a fixed manner, wherein the bending restrictor is configured to restrict the elongated member with a varying degree of freedom when bending occurs in the elongated member, selecting one or several appointed areas in accordance with the specific need depending on the operational situation and longitudinal position along the elongated member.

The bend restrictor is prepared to respond to momentary abrupt movements of the hose which may occur with rapid acceleration. These movements of the elongated member may appear during push, pull and retrieval operations or in other situations where the hose is exposed to tugging, snatching, yanking etc.

It is an objective of the invention to provide a versatile solution where at least one portion of the hose is protected in accordance with the specific need defined by the user and may be applicable in various critical bending situations. The hose end is especially exposed to critical bending forces during connection, disconnection and when connected to a corresponding manifold or the like.

The bend restrictor in accordance with the invention is particularly applicable for an elongated member to be employed between various operative and storage positions. The bend restrictor is provided to protect the elongated member such as a hose in critical situations such as transfer of fluid through the hose, transfer, landing, connecting and disconnecting of hose end as well as protecting the hose in an emergency release situation. In addition to protect the hose in various operative positions, the bend restrictor is also arranged so that a storage position of the hose is obtained with the bend restrictor mounted onto the hose. Thus, the bend restrictor in accordance with the invention is provided to follow the movements and configurations of the elongated member when being moved from an outstretched rectilinear configuration such as in a storage position where the elongated member may be arranged in a vertical position, to a position where at least a portion of the elongated member may be arranged in a bended position.

### Summary of the invention

The invention is set forth and characterized in the independent claim while the dependent claims describe other characteristics of the invention.

Bend restrictor for preventing an elongated member from reaching a bending radius less than the allowable bending radius of the elongated member when one end of the elongated member is in a connected position with a connector on board a vessel. A connecting arrangement is positioned at an end portion of the bend restrictor and is provided to engage the elongated member in a fixed manner. The bend restrictor has an essentially open faced contact area comprising a longitudinal extent providing support for the elongated member in its longitudinal direction and a transverse extent providing support for the elongated member in its transverse direction. The bend restrictor has retainer means arranged for the bend restrictor to follow the longitudinal bending of the elongated member. The longitudinal bending may be defined as the bending path of the elongated member in a substantially vertical plane with one end portion of the elongated member engaged to the connecting arrangement in the fixed manner. Thus, the bend restrictor according to the present invention has an essentially open faced contact area and comprises plural bend restrictor sections sequentially attached to each other by a hinged joint arrangement allowing angular displacement of the bend sections to follow the bending path of the elongated member in a substantially vertical plane. The bend restrictor further comprises plural bend restrictor sections wherein two and two, i.e. neighboring, bend restrictor sections are connected in a hinged joint arranged for allowing angular displacement to occur within a preset range as a response to the longitudinal bending of the elongated member. The transverse extent of the contact area which is arranged perpendicular to the longitudinal extent increases in direction of the bend restrictor away from the connecting arrangement thereby providing an expanding shaped contact area. In other words, the bend restrictor sections are arranged with a subsequently increasing width transverse to the vertical plane when moving in a direction away from the connection arrangement allowing for movement of the elongated member in a direction transverse to the substantially vertical bending plane of the elongated member.

By the arrangement of the expanding shaped contact area in the transverse extent, the elongated member is allowed an increasing degree of freedom in the transverse direction when moving away from the connecting arrangement. This arrangement introduces the possibility of allowing the elongated member a certain degree of movement in the transverse direction of the elongated member. The configuration of the contact area of the inventive bend restrictor limits the movement of the elongated member and prevents the elongated member from reaching a radius less than the allowable bending. Further, the essentially open faced contact area for supporting the elongated member facilitates the carrying out inspection of the elongated member and the bend restrictor. A profile of the contact area which is a cross section perpendicular to the longitudinal extent, i.e. the transverse extent, of the bend restrictor may have a curved or rectilinear shape. The cross section of the contact area oriented along the longitudinal extent of the bend restrictor may have a rectilinear or a curved shape.

The shape of the contact area combined with the allowed hinged displacement of the neighboring bend restrictor sections determines the bending radius of the supported hose portion.

When the cross section of the contact area has a rectilinear shape, the overall shape of the bend restrictor in an unloaded condition may appear with the bend restrictor sections essentially arranged one after the other in rectilinear pattern along a longitudinal orbit of the bend restrictor. And when bending occurs the bend restrictor will appear as a curved shaped plate structure following the bending of the elongated member about the longitudinal orbit of the elongated member.

In one embodiment of the bend restrictor, the expanding shaped contact area increases gradually away from the connecting arrangement. The bend restrictor may be made up by plural bend restrictor sections each designed as a panel or a plate structure. Neighboring bend restrictor sections making up the bend restrictor may be subsequently increasing in transverse extent when moving in a direction away from the connection arrangement.

The arrangement of a rectilinear transverse contact area provides the inventive bend restrictor with advantageously features compared to a bend restrictor having a transverse curved shaped cross section. When the transverse cross section of the contact area has a curved shape, the overall shape of the bend restrictor will appear as lengthwise cut half pipe with an increasing diameter in an unloaded condition and when bending occurs the bend restrictor will assume an approximately trumpet shape.

A trumpet shaped bend restrictor inhibits the free movement of the elongated member in all directions. The transverse movement of the elongated member occurs in a direction perpendicular to the longitudinal direction of the elongated member. Providing the contact area with a rectilinear or a straight shape provides the inventive bend restrictor with a freedom of operation in the transverse direction that is absent or at least very restricted in a trumpet shaped bend restrictor, which leaves little space available for transverse movement of the elongated member.

Consequently the inventive bend restrictor with a cross section that is rectilinear or straight is a preferable choice when transverse movement of the elongated member is expected to occur. When two horizontal planes move in the horizontal plane such as for instance two vessels expected to move relative to each other in their lengthwise direction and having a hose arranged in between the two vessels, a bend restrictor with a rectilinear or straight cross section is advantageous compared to a bend restrictor having a curved shaped cross section. The inventive bend restrictor will then provide restriction in the movement of the elongated element both in the longitudinal direction and in the transverse direction of the elongated element.

When the end of the elongated member is in a connected position for instance with a connector on board a vessel, the region of the elongated member close to the elongated member connection area is particularly subjected to bending forces. To restrict the bending radius of the elongated member the bend restrictor may consequently be employed in this same region where the bending forces are high. Further, the bend restrictor is provided with the connecting arrangement such as a termination enclosure arranged to be attached to a connector e.g. at the end of the elongated member, to make sure the bend restrictor is kept in position relative to the elongated member. The connecting arrangement may comprise a hose connector support unit which is open faced and which is arranged for receiving a hose connector. Further, the connecting arrangement may comprise a connecting element such as a ring device to be fitted around the hose connector, in order to provide a fixated position relative to the hose.

The bend restrictor is provided with an essentially open faced contact area facilitating the inspection of the elongated member such as a hose, and in accordance with this aspect at least one of the bend restrictor sections is arranged as an open faced element. This arrangement of an open faced bend restrictor facilitates for instance inspection and maintenance work such as handling of ice build-up.

The bend restrictor sections are arranged to hinge or pivot relative to each other about a pivot axis which may for instance be provided by a hinge pin. By this arrangement a simple hinged joint following the working principles of a pivoting hinge is utilized for the connection of neighboring bend restrictor sections. The corresponding joint elements of the hinged joint may be connected to each other by a pivot axle or a hinge pin arranged in through holes of the corresponding joint elements. The hinged joint may be arranged in various ways to obtain the angular displacement by pivoting movement. According to an aspect of the present invention, an axis of rotation of the hinged joint may be arranged essentially parallel to the transverse extent of the bend restrictor.

The bend restrictor sections may have a uniform or a non uniform configuration. In one embodiment each of the bend restrictor sections are arranged with a contact area having a gradually increasing transverse extent when moving away from the connecting arrangement. In such an embodiment there is a corresponding width of the transverse extent of the neighboring bend restrictor sections in the hinged joint so that the smallest width of one bend restrictor section correspond to the largest width of neighboring bend restrictor section.
In one embodiment at least one bend restrictor section may have the shape of a trapezoid for instance an isosceles trapezoid. In a further embodiment all the bend restrictor sections may have the shape of a trapezoid for instance an isosceles trapezoid. When the bend restrictor sections are positioned in an essentially aligned rectilinear arrangement, the bend restrictor sections constitute the overall shape of trapezoid for instance an isosceles trapezoid.

The corresponding joint elements of the hinged joint may be provided with a toothed connection area arranged for connection with a corresponding toothed connection area of a neighboring bend restrictor element. This arrangement of interacting toothed connection areas provides additional means to obtain a stable guidance for the hinged joint. The interacting toothed connection areas facilitate a controlled and non-waddling rotation of the hinged bend restrictor sections as a response to the bending of the elongated member.
The bend restrictor is capable of adapting to an essentially aligned rectilinear position of the elongated member and adjustment to various bent configurations of the elongated member in operative positions. The operative positions include an operative bending position where at least some of the bend restrictor sections are displaced relative to each other forming an angular deviation of the bend restrictor away from a horizontal axis.

The operative positions of the bend restrictor may also include an essentially horizontal position of the bend restrictor, where little or no bending of the elongated member occurs so that the bend restrictor sections are positioned in an essentially aligned rectilinear arrangement. In this horizontal position the bend restrictor sections are arranged essentially following a horizontal axis.
The bend restrictor may also have an over bending position where the bend restrictor is positioned with an angular deviation away from the horizontal axis in a direction opposite to the angular deviation occurring in the operative bending position.

In addition to the various operative positions, the bend restrictor may also be arranged in a storage position. The bend restrictor may be positioned so that the bend restrictor sections are aligned in an essentially rectilinear arrangement following a vertical axis. This vertical position may work as a storage position for the elongated member.

The hinged joint may be provided with stop means for provisions of end stop positions to control that the allowed hinged displacement may take place between neighboring bend restrictor sections in at least one or some of the operative and storage positions. The bend restrictor sections are arranged to allow a predetermined angular displacement to occur as a response to the longitudinal bending of the elongated member. The arrangement of stop means provides for angular displacement of the bend restrictor sections to occur freely relative to each other in between the stop positions. The stop positions define the preset range for allowed angular displacement to occur as a response to the longitudinal bending of the elongated member.

The stop means may be provided to allow the same bending radius of the elongated member all through the bend restrictor, or stop means may be provided so that a different bending radius is allowed at the various connections of the various bend restrictor sections.

The stop means may be provided by various arrangements and may in one embodiment comprise first stop surfaces arranged at neighboring bend restrictor sections, which restrict the angular displacement of neighboring bend restrictor sections when brought into contact with each other. The first stop areas, i.e. the first stop surfaces, may be designated for defining the allowed angular displacement to occur when obtaining the operative bending position. It is possible to provide the stop means to control the position of the bending sections in the horizontal position of the bend restrictor, but in most situations the bending sections will freely assume its positions without restrictions. The stop means may also be provided to ensure that an essentially rectilinear alignment of the bending sections into the vertical position obtained for instance for storage purposes, but in most situations the bend restrictor will assume a free hanging vertical position without restrictions specified for obtaining the vertical position. The elongated member in the vertical position may be provided hanging with a free end pointing downwards, such as in a free hanging vertical position, or may be suspended with the free end of the elongated member pointing upwards.

The stop means may also comprise provisions such as for instance second stop surfaces also arranged at neighboring bend restrictor sections. The second stop surfaces may be designated for defining the allowed hinged displacement to occur when obtaining the over bending position.

It should be mentioned that also means for obtaining the horizontal and vertical position may be provided to secure the bending sections in the positions for assuming the horizontal and vertical position, but as mentioned above the horizontal and vertical position may be obtained without the need for additional stopping means.

Motion resisting means may be provided to dampen the hinged displacement to occur between two neighboring bend restrictor sections.
The at least one bend restrictor section may be provided with retainer means configured so that the at least one bend restrictor section follows the bending of the elongated member. The retainer means may be configured so that the displacement of the elongated member in the radial direction of the elongated member is limited relative to the bend restrictor section. By this arrangement the bending of the elongated member is transferred to the bend restrictor and the bend restrictor prevents further bending when the predetermined bending radius is obtained.

In one embodiment the retainer means may encompass the elongated member. The retainer means may comprise at least one hooped shaped retainer device which encompasses the elongated member. The height of the at least one hooped shaped retainer device corresponds essentially to the diameter of the elongated member, to make sure the elongated member is fitted tightly in the radial direction of the elongated member and the bending of the elongated member is transferred to the bend restrictor. The hooped shaped retainer device may in one embodiment be a retainer ring connected to the at least one bend restrictor section providing a ring shaped interior for the accommodation of a portion of the elongated member. The least at one hooped shaped retainer device may be connected to the bend restrictor in a demountable manner.

The hooped shaped retainer devices may be provided in various ways and in one embodiment hooped shaped retainer devices have a width which corresponds to or is larger than the width of the bend restrictor section. The width of the bend restrictor section is oriented in the same direction as in the transverse extent of the bend restrictor and may correspond to the transverse extent of the contact surface. By this arrangement the elongated member is allowed some movement in the transverse direction following the transverse extent of the contact area.

The bend restrictor may be provided with plural, or several, hooped shaped retainer devices and the size and shape of the individual hooped shaped retainer devices varies or is constant. In one embodiment each bend restrictor section is provided with one hooped shaped retainer device in order to make sure that the bending movement of the elongated member is transferred to each of the bend restrictor sections so that the bend restrictor follows the movement of the elongated member.

In one embodiment at least one hooped shaped retainer device may have a longitudinal extension corresponding to the longitudinal extension of the bend restrictor section. At least one hooped shaped retainer device may have a curved shaped cross section. In one embodiment a cover may be fitted in between at least two of the hooped shaped retainer devices to protect the elongated member.

The characteristics of the invention, as well as further technical features and functions will be explained in more detail with reference to the attached drawings showing a non-restrictive example, wherein:

### Brief description of the drawings

Fig 1 shows an elevated view of the bend restrictor in accordance with the invention.
Fig 2 shows a front view of the bend restrictor as shown in fig 1.
Fig 3 shows a side view of the bend restrictor as shown in fig 1.
Fig 4a, 4b show a bottom view of the bend restrictor as shown in fig 1.
Fig 5a, 5b show a detail of a hinged joint of the bend restrictor as shown in fig 1.

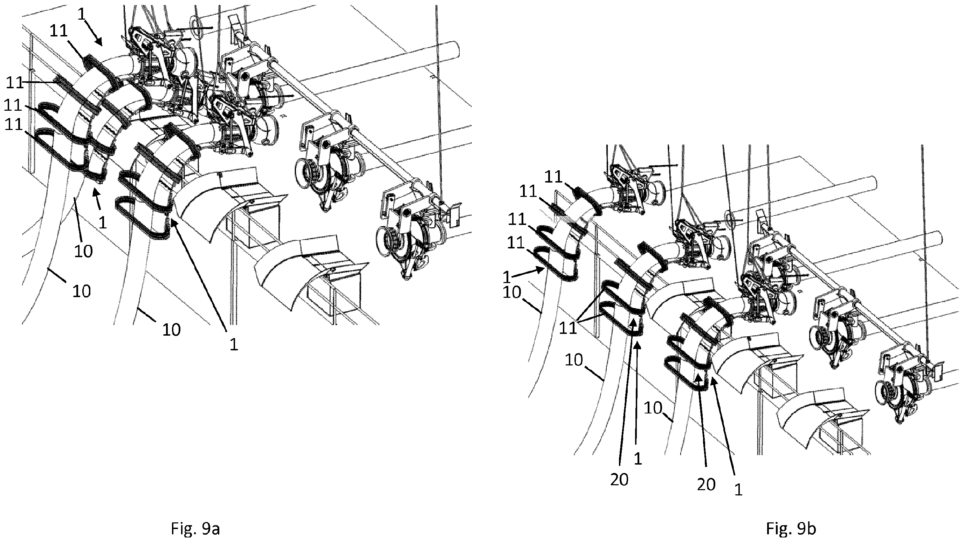

Fig 6-9 show the protection of the hose by the bend restrictor in situations where the bending of the hose may be critical.
Fig 10 show the protection of the hose by the bend restrictor in a rectilinear position.
Fig 11 comparing the inventive bend restrictor with a trumpet shaped bend restrictor.

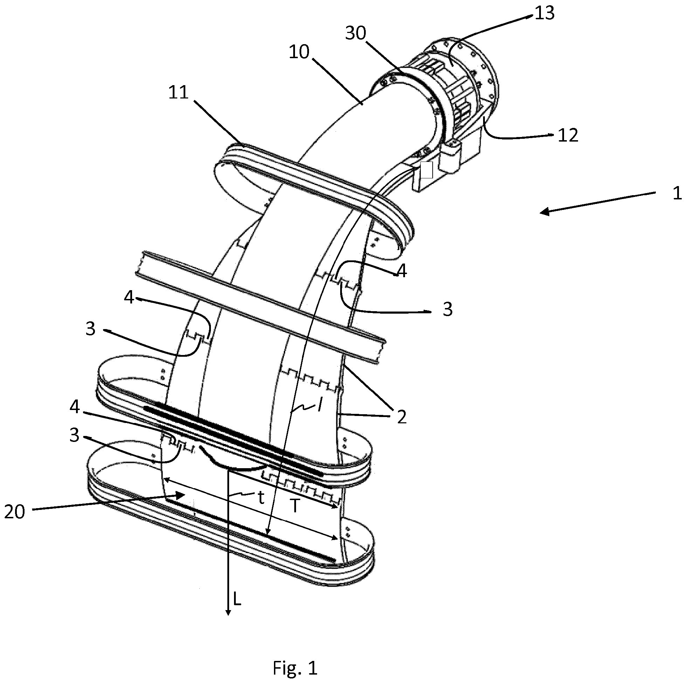

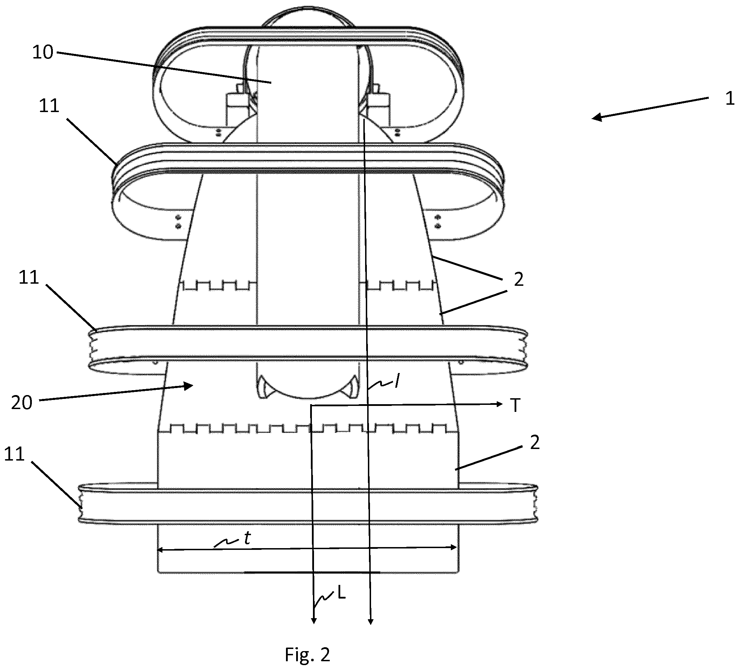

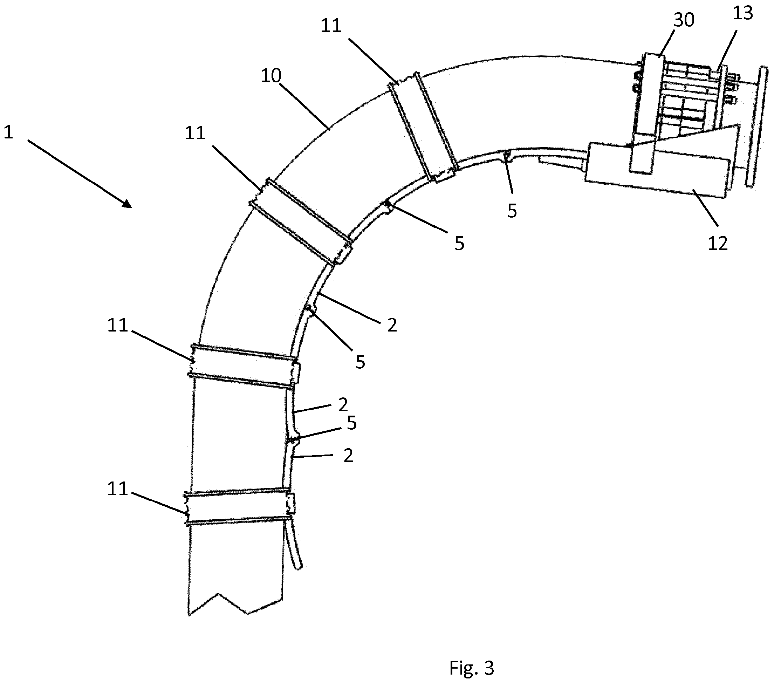

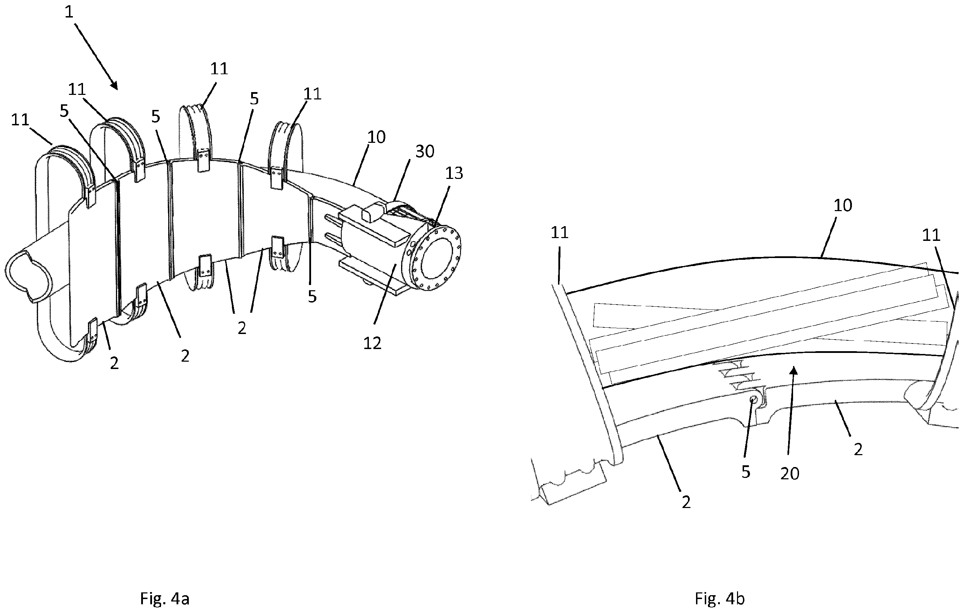

A bend restrictor 1 in accordance with the invention is made up of an assembly of plural bend restrictor sections 2 as seen in fig 1 to fig 5. The bend restrictor 1 in accordance with the invention is provided for preventing an elongated member such as a flexible hose 10 from reaching a predetermined bending radius. The bend restrictor 1 may be employed for supporting a portion of the hose close to a hose end, for instance a hose connector 13 arranged for connection for instance on board a vessel. The shown bend restrictor 1 is arranged as an essentially open faced unit which facilitates the inspection of the hose 10 and hose connector 13 and the monitoring of the ice build up. Each bend restrictor section 2 as shown is provided as a plate structure and has an open faced contact area 20 for the hose 10, wherein the contact area 20 has a longitudinal extent / providing support for the hose 10 in its longitudinal direction *L* and a transverse extent *t* providing support for the elongated member or hose 10 in its transverse direction T. The contact area 20 has a rectilinear shape for supporting the hose 10, i.e. there is a corresponding width of the transverse extent t of the neighboring bend restrictor sections 2 so that the smallest width of one bend restrictor section 2 correspond to the largest width of neighboring bend restrictor section 2.

Each bend restrictor section 2 has joint elements 3 arranged for connection with corresponding joint elements 4 of a neighboring bend restrictor section 2. In fig 1-5 the joint elements 3, 4 are provided as a toothed connection area arranged to interact with a corresponding toothed connection area of a neighboring bend restrictor section 2. A pivot axle 5 such as a hinge pin may be used for connection of the joint elements 3, 4 to provide a hinged joint. In the embodiment shown in fig 1-5 stop means allowing a limited or predetermined hinged displacement of the bend restrictor sections are provided as first stop surfaces 6, 7 arranged at neighboring bend restrictor sections 2. The first stop surfaces 6, 7 may be arranged or configured to be positioned in an abutting contact with each other defining the maximum angular positioning of the individual bend restrictor section 2 relative to the neighboring bend restrictor section 2.

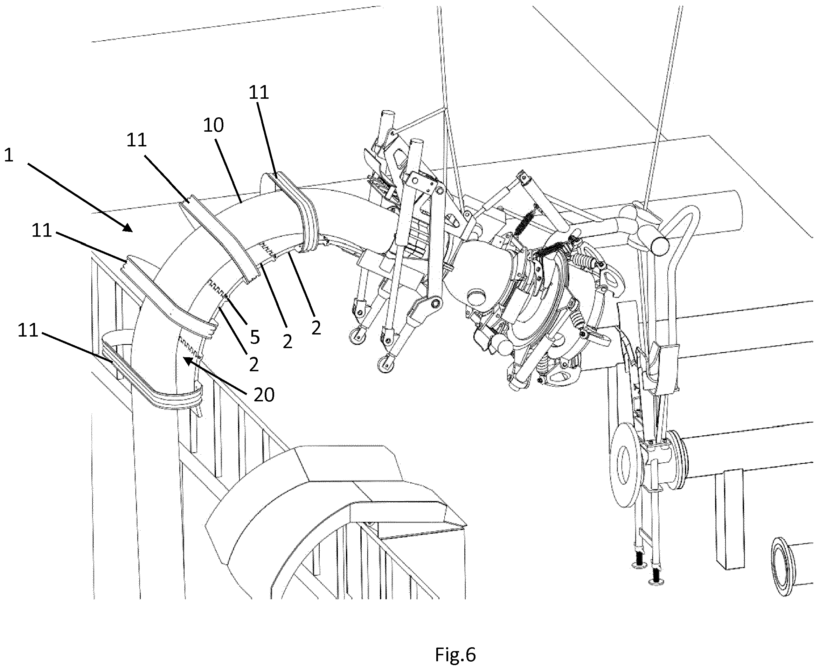

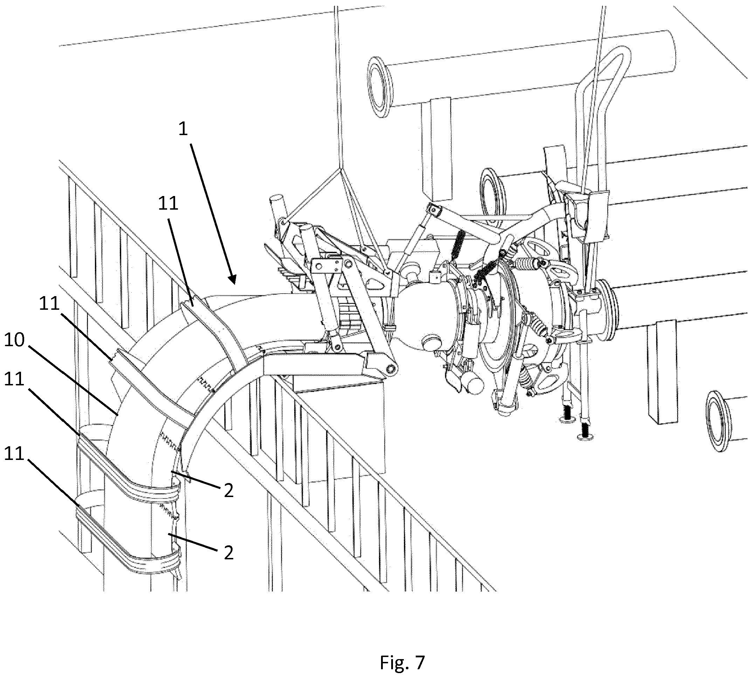

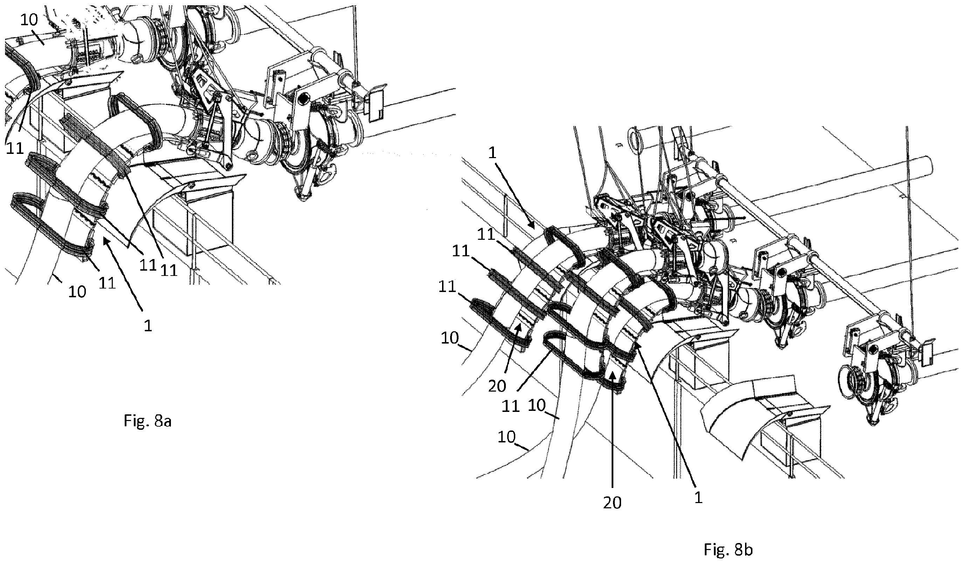

The bend restrictor sections are arranged to pivot relative to each other about the pivot axle 5 as a response to the bending of the flexible hose 10 occuring in an essentially vertical plane. As shown in the fig 1-5 the bend restrictor sections 2 are arranged to pivot about the pivot axle 5 for carrying out an hinged displacement as a response when bending of the elongated member 10 occurs. As seen from fig 1-5 the pivot axle 5 is arranged perpendicular to the longitudinal axis of the hose 10. Fig 6, 7, 8a and 8b show plural bend restrictors 1 each arranged around the hose end of a hose 10. The bend restrictors 1 in figures 6, 7, 8a and 8b are shown displayed in various positions in figures 6, 7, 8a and 8b in accordance with the curvature of the hose 10.
The bend restrictor 1 as shown in fig 6 is adapted to the curvature attained by the hoses 10 during a transfer and retrieval operation. When the curvature(s) of the hoses 10 are modified as a result of arranging the hoses 10 in a connected position for the transfer of fluid as shown in fig 7, the bend restrictors 1 are modified accordingly by the hinged displacement of the bend restrictor sections 2 relative to each other thereby obtaining a curvature of the bend restrictors 1 which differs from the curvature of the bend restrictors when bending occurs in the vertical plane as shown in fig 6. Fig 8a, 8b show the hoses 10 in the different situations, and the various curvature of the bend restrictors 1 following the movements into various positions of the hoses 10.

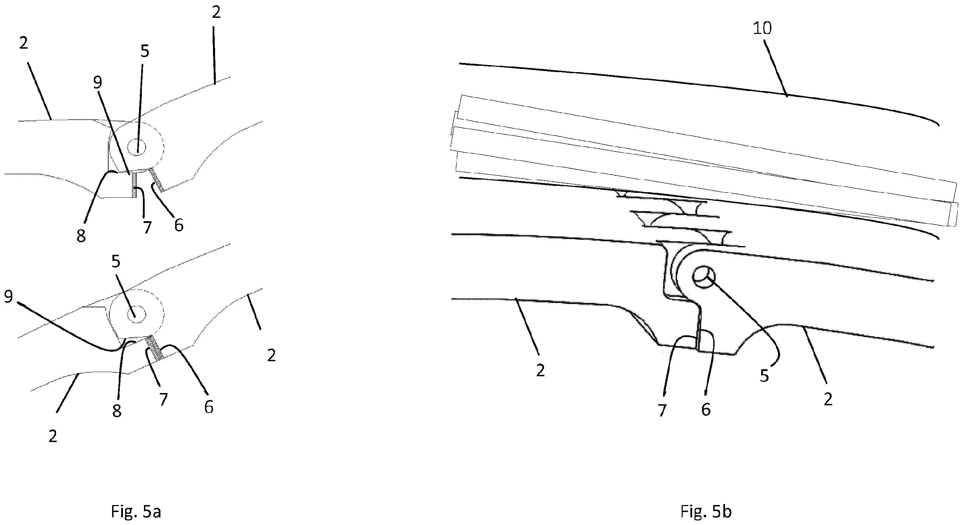

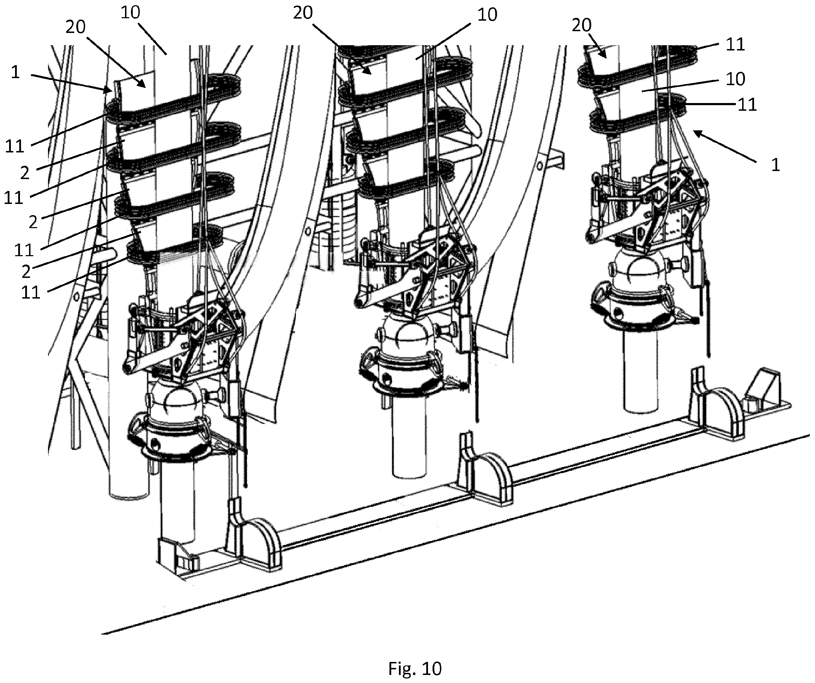

Fig 10 shows the hose 10 in a free hanging essentially downward rectilinear vertical position, which may also be the storage position of the hose 10. In the shown vertical position the hose bend restrictors 1 are arranged in a non curved vertical position where the bend restrictors sections 2 are essentially aligned. The bend restrictor sections 2 have been pivoted relative to each other as a response to moving the hose 10 from a curved to a straight position as shown in fig 10.
To make sure the bend restrictor 1 is held in an essentially rectilinear position such as a vertical position the stop means of the hose 10 may also comprise second stop surfaces 8, 9 see fig 5a, provided at neighboring bend restrictor sections 2. The second stop surfaces 8, 9 are arranged to be positioned in abutting contact with each other, and in this position the individual bend restrictor section 2 is arranged in an aligned position relative to the neighboring bend restrictor section 2.

As seen in the figures the bend restrictor 1 may be arranged with retainer means 11 such as hooped shaped retainer devices arranged to closely follow the bending of the hose in the vertical plane. The hooped shaped retainer device is arranged with a height which encompasses the hose 10 and this height is chosen so that it corresponds essentially with the diameter of the hose 10. In the embodiment shown in the figures each of the bend restrictor sections 2 of the bend restrictor is provided with a hooped shaped retainer device 11. It is of course also possible to arrange the bend restrictor section 2 with more than one hooped shaped retainer device 11.

As seen from the figures, the hooped shaped retainer devices are provided with the same size and shape, but as the skilled person will realize the hooped shaped retainer devices may be provided with an individually varying size and/or shape. The bend restrictor sections 2 have a transverse expanding configuration as seen in the plan view of the bend restrictor shown in the figures. In the arrangement of the bend restrictor 1 as shown in the figures, a transverse extent t of the bend restrictor section 2 closer to the hose connector 13 is smaller than the comparatively wider transverse extent further away from the hose connector 13. This configuration of the bend restrictor 1 allows the hose some movement in a direction transverse to the longitudinal direction L of the hose 10. The bend restrictor 1 is provided with connecting arrangement which is positioned at an end portion of the bend restrictor and is provided to engage the hose in a fixed manner. As shown in the figures the connecting arrangement may comprise a hose connector support unit 12 which is open faced and which is arranged for receiving the hose connector 13. Further the connecting arrangement may comprise a connecting element 30 here arranged as ring device to be fitted around the hose connector 13 in order to provide a fixated position relative to the hose 10.

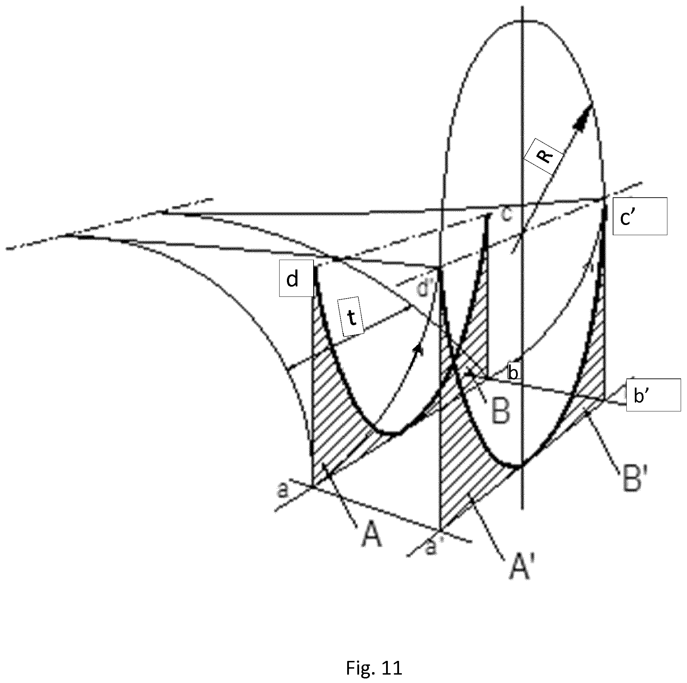

Fig 11 compares the inventive bend restrictor 1 with the rectilinear shaped transverse extent t with a bend restrictor having a transverse extent that is curved shaped, illustrated by the lines c-d and c'-d'. When the transverse extend t of the contact area has a curved shape as shown by the lines c-d and c'-d', the overall shape of the bend restrictor will appear as lengthwise cut half pipe lines with an increasing diameter in an unloaded condition and when bending occurs the bend restrictor will assume an approximately trumpet shape.

A trumpet shaped bend restrictor inhibits the free movement of the elongated member in the transverse direction T, while the bend restrictor 1 having a contact surface, i.e. a contact area 20, with a rectilinear shaped transverse extent t as shown in fig 11, has a comparatively larger space allowing the elongated member 10 to move in the transverse direction T. The difference of freedom of operation between these two bend restrictors is illustrated by shaded area A, A', B and B'. Consequently the inventive bend restrictor with a contact surface that has a rectilinear shaped transverse extent t is advantageous when transverse movement of the hose (elongated member) 10 is to expected.

## Claims

1. Bend restrictor (1) for preventing an elongated member (10) from reaching a bending radius less than the allowable bending radius of the elongated member (10) when one end of the elongated member (10) is in a connected position with a connector on board a vessel, wherein a connecting arrangement (12, 30) is positioned at an end portion of the bend restrictor (1) and is provided to engage the elongated member (10) in a fixed manner and the bend restrictor (1) has an essentially open faced contact area (20) comprising a longitudinal extent (/) providing support for the elongated member (10) in its longitudinal direction (L) and a transverse extent (t) providing support for the elongated member (10) in its transverse direction (*T*), the bend restrictor (1) has retainer means (11) arranged for the bend restrictor (1) to follow the longitudinal bending of the elongated member (10), wherein the bend restrictor (1) comprises plural bend restrictor sections (2) wherein two and two neighboring bend restrictor sections (2) are connected in a hinged joint arranged for allowing angular displacement to occur within a preset range as a response to the longitudinal bending of the elongated member (10), wherein a transverse extent (t) of the contact area (20) increases along the longitudinal extent (*l*) away from the connecting arrangement (12, 30) thereby providing an expanding shaped contact area (20).

2. Bend restrictor (1) in accordance with claim 1, wherein the expanding shaped contact area (20) increases gradually away from the connecting arrangement (12, 30).

3. Bend restrictor (1) in accordance with claim 1 or 2, wherein the transverse extent (t) of the contact area (20) has a rectilinear shape.

4. Bend restrictor (1) in accordance with one of the preceding claims,
wherein the longitudinal extent (*l*) of the contact area (20) has a rectilinear or curved shape.

5. Bend restrictor (1) in accordance with one of the preceding claims,
wherein at least one bend restrictor section (2) is provided with the retainer means (11), wherein the retainer means (11) can encompass the elongated member (10).

6. Bend restrictor in accordance with claim 4, wherein the retainer means (11) comprises at least one hooped shaped retainer device (11) connected to the at least one bend restrictor section (2) providing a ring shaped interior for the accommodation of a portion of the elongated member (10).

7. Bend restrictor (1) in accordance with one of the preceding claims 2-3, wherein the at least at one hooped shaped retainer device (11) is connected to the bend restrictor (1) in a demountable manner.

8. Bend restrictor (1) in accordance in accordance with one of the preceding claims 6-7, wherein the height of least one hooped shaped retainer device (11) corresponds essentially to the diameter of the elongated member (10).

9. Bend restrictor (1) in accordance with one of the preceding claims 6-8, wherein the hooped shaped retainer devices (11) has a width which corresponds to or is larger than the width of the bend restrictor section (2).

10. Bend restrictor (1) in accordance with one of the preceding claims 6-9, wherein the bend restrictor (1) is provided with plural hooped shaped retainer devices (11) and the size and shape of the individual hooped shaped retainer devices (11) varies or is constant.

11. Bend restrictor (1) in accordance with one of the preceding claims 7-10, wherein at least one hooped shaped retainer device (11) has a longitudinal extension which corresponds to the longitudinal extension of the bend restrictor section (2).

12. Bend restrictor (1) in accordance with one of the preceding claims 7-11, wherein at least one hooped shaped retainer device (11) has curved shaped cross section.

13. Bend restrictor (1) in accordance with one of the preceding claims 7-12, wherein a cover is fitted in between at least two of the hooped shaped retainer devices (11).

14. Bend restrictor (1) in accordance with one of the preceding claims, wherein an axis of rotation of the hinged joint is arranged essentially parallel to the transverse extent (t) of the bend restrictor (1).

15. Bend restrictor (1) in accordance with one of the preceding claims,
wherein stop means (6, 7) provides an end stop position(s) of at least one neighboring bend restrictor section (2).

## Patentansprüche

1. Biegebegrenzer (1) zum Verhindern, dass ein längliches Element (10) einen Biegeradius von weniger als dem zulässigen Biegeradius des länglichen Elements (10) erreicht, wenn ein Ende des länglichen Elements (10) in einer verbundenen Position mit einem Anschluss an Bord eines Schiffes ist, wobei eine Verbindungsanordnung (12, 30) an einem Endteil des Biegebegrenzers (1) positioniert ist und bereitgestellt ist, um das längliche Element (10) auf eine feste Weise in Eingriff zu nehmen und der Biegebegrenzer (1) einen im Wesentlichen offenen Kontaktbereich (20) aufweist, der ein Längsmaß (*l*), das Stütze für das längliche Element (10) in seiner Längsrichtung (L) bereitstellt, und ein Quermaß (t), das Stütze für das längliche Element (10) in seiner Querrichtung (T) bereitstellt, umfasst, wobei der Biegebegrenzer (1) Rückhaltemittel (11) aufweist, die angeordnet sind, sodass der Biegebegrenzer (1) der Längsbiegung des länglichen Elements (10) folgt, wobei der Biegebegrenzer (1) mehrere Biegebegrenzerabschnitte (2) umfasst, wobei zwei und zwei benachbarte Biegebegrenzerabschnitte (2) in einer Gelenkverbindung verbunden sind, die angeordnet ist, um zu ermöglichen, dass als Reaktion auf die Längsbiegung des länglichen Elements (10) Winkelverschiebung innerhalb einer vorbestimmten Spanne stattfindet, wobei ein Quermaß (t) des Kontaktbereichs (20) entlang des Längsmaßes (*l*) weg von der Verbindungsanordnung (12, 30) zunimmt, wodurch ein sich erweiternder geformter Kontaktbereich (20) bereitgestellt wird.

2. Biegebegrenzer (1) nach Anspruch 1, wobei der sich erweiternde geformte Kontaktbereich (20) graduell weg von der Verbindungsanordnung (12, 30) zunimmt.

3. Biegebegrenzer (1) nach Anspruch 1 oder 2, wobei das Quermaß (t) des Kontaktbereichs (20) eine geradlinige Form aufweist.

4. Biegebegrenzer (1) nach einem der vorhergehenden Ansprüche, wobei das Längsmaß (*l*) des Kontaktbereichs (20) eine geradlinige oder gebogene Form aufweist.

5. Biegebegrenzer (1) nach einem der vorhergehenden Ansprüche, wobei zumindest einem Biegebegrenzerabschnitt (2) mit den Rückhaltemitteln (11) versehen ist, wobei die Rückhaltemittel (11) das längliche Element (10) umschließen können.

6. Biegebegrenzer (1) nach Anspruch 4, wobei die Rückhaltemittel (11) zumindest eine reifenförmige Rückhaltevorrichtung (11) umfassen, die mit dem zumindest einen Biegebegrenzerabschnitt (2) verbunden ist, wodurch ein ringförmiges Inneres für die Aufnahme eines Teils des länglichen Elements (10) bereitgestellt wird.

7. Biegebegrenzer (1) nach einem der vorhergehenden Ansprüche 2-3, wobei die zumindest eine reifenförmige Rückhaltevorrichtung (11) auf demontierbare Weise mit dem Biegebegrenzer (1) verbunden ist.

8. Biegebegrenzer (1) nach einem der vorhergehenden Ansprüche 6-7, wobei die Höhe von zumindest einer reifenförmigen Rückhaltevorrichtung (11) im Wesentlichen dem Durchmesser des länglichen Elements (10) entspricht.

9. Biegebegrenzer (1) nach einem der vorhergehenden Ansprüche 6-8, wobei die reifenförmige Rückhaltevorrichtung (11) eine Breite aufweist, die der Breite des Biegebegrenzerabschnitts (2) entspricht oder größer als diese ist.

10. Biegebegrenzer (1) nach einem der vorhergehenden Ansprüche 6-9, wobei der Biegebegrenzer (1) mit mehreren reifenförmigen Rückhaltevorrichtungen (11) versehen ist und die Größe und Form der einzelnen reifenförmigen Rückhaltevorrichtungen (11) variiert oder konstant ist.

11. Biegebegrenzer (1) nach einem der vorhergehenden Ansprüche 7-10, wobei zumindest eine reifenförmige Rückhaltevorrichtung (11) eine Längserstreckung aufweist, die der Längserstreckung des Biegebegrenzerabschnitts (2) entspricht.

12. Biegebegrenzer (1) nach einem der vorhergehenden Ansprüche 7-11, wobei zumindest eine reifenförmige Rückhaltevorrichtung (11) einen gebogenen Querschnitt aufweist.

13. Biegebegrenzer (1) nach einem der vorhergehenden Ansprüche 7-12, wobei eine Abdeckung zwischen zumindest zwei der reifenförmigen Rückhaltevorrichtungen (11) eingefügt ist.

14. Biegebegrenzer (1) nach einem der vorhergehenden Ansprüche, wobei eine Drehachse der Gelenkverbindung im Wesentlichen parallel zu dem Quermaß (t) des Biegebegrenzers (1) angeordnet ist.

15. Biegebegrenzer (1) nach einem der vorhergehenden Ansprüche, wobei Anschlagsmittel (6, 7) (eine) Endanschlagsposition(en) von zumindest einem benachbarten Biegebegrenzerabschnitt (2) bereitstellen.

## Revendications

1. Limiteur de courbure (1) pour empêcher un élément allongé (10) d'atteindre un rayon de courbure inférieur au rayon de courbure admissible de l'élément allongé (10) lorsqu'une extrémité de l'élément allongé (10) est dans une position raccordée avec un raccord à bord d'un navire, dans lequel un agencement de raccordement (12, 30) est positionné au niveau d'une partie d'extrémité du limiteur de courbure (1) et est prévu pour venir en prise avec l'élément allongé (10) de manire fixe et le limiteur de courbure (1) a une zone de contact (20) sensiblement à face ouverte comprenant une étendue longitudinale (l) assurant le support de l'élément allongé (10) dans sa direction longitudinale (L) et une étendue transversale (t) assurant le support de l'élément allongé (10) dans sa direction transversale (T), le limiteur de courbure (1) a des moyens de retenue (11) disposés de manière à permettre au limiteur de courbure (1) de suivre la courbure longitudinale de l'élément allongé (10), dans lequel le limiteur de courbure (1) comprend plusieurs sections de limiteur de courbure (2), dans lequel des sections de limiteur de courbure (2) voisines sont raccordées deux par deux suivant un joint articulé prévu pour permettre un déplacement angulaire dans une plage préétablie en réponse à la courbure longitudinale de l'élément allongé (10), dans lequel une étendue transversale (t) de la zone de contact (20) augmente le long de l'étendue longitudinale (l) en s'éloignant de l'agencement de raccordement (12, 30) pour ainsi fournir une zone de contact (20) ayant une forme s'élargissant.

2. Limiteur de courbure (1) selon la revendication 1, dans lequel la zone de contact (20) ayant une forme s'élargissant augmente progressivement en s'éloignant de l'agencement de raccordement (12, 30).

3. Limiteur de courbure (1) selon la revendication 1 ou 2, dans lequel l'étendue transversale (t) de la zone de contact (20) a une forme rectiligne.

4. Limiteur de courbure (1) selon l'une des revendications précédentes, dans lequel l'étendue longitudinale (l) de la zone de contact (20) a une forme rectiligne ou courbée.

5. Limiteur de courbure (1) selon l'une des revendications précédentes, dans lequel au moins une section de limiteur de courbure (2) est pourvue des moyens de retenue (11), dans lequel les moyens de retenue (11) peuvent entourer l'élément allongé (10).

6. Limiteur de courbure selon la revendication 4, dans lequel les moyens de retenue (11) comprennent au moins un dispositif de retenue en forme de cercle (11) raccordé à l'au moins une section de limiteur de courbure (2) fournissant un intérieur en forme d'anneau pour loger une partie de l'élément allongé (10).

7. Limiteur de courbure (1) selon l'une des revendications précédentes 2 et 3, dans lequel l'au moins un dispositif de retenue en forme de cercle (11) est raccordé au limiteur de courbure (1) de manière démontable.

8. Limiteur de courbure (1) selon l'une des revendications précédentes 6 et 7, dans lequel la hauteur d'au moins un dispositif de retenue en forme de cercle (11) correspond sensiblement au diamètre de l'élément allongé (10).

9. Limiteur de courbure (1) selon l'une des revendications précédentes 6 à 8, dans lequel les dispositifs de retenue en forme de cercle (11) ont une largeur qui correspond à ou est supérieure à la largeur de la section de limiteur de courbure (2).

10. Limiteur de courbure (1) selon l'une des revendications précédentes 6 à 9, dans lequel le limiteur de courbure (1) est pourvu de plusieurs dispositifs de retenue en forme de cercle (11) et la taille et la forme des dispositifs de retenue en forme de cercle (11) individuels varie ou est constante.

11. Limiteur de courbure (1) selon l'une des revendications précédentes 7 à 10, dans lequel au moins un dispositif de retenue en forme de cercle (11) a une extension longitudinale qui correspond à l'extension longitudinale de la section de limiteur de courbure (2).

12. Limiteur de courbure (1) selon l'une des revendications précédentes 7 à 11, dans lequel au moins un dispositif de retenue en forme de cercle (11) a une section transversale de forme courbée.

13. Limiteur de courbure (1) selon l'une des revendications précédentes 7 à 12, dans lequel un couvercle est monté entre au moins deux des dispositifs de retenue en forme de cercle (11).

14. Limiteur de courbure (1) selon l'une des revendications précédentes, dans lequel un axe de rotation du joint articulé est agencé de manière sensiblement parallèle à l'étendue transversale (t) du limiteur de courbure (1).

15. Limiteur de courbure (1) selon l'une des revendications précédentes, dans lequel des moyens d'arrêt (6, 7) fournissent une ou des positions d'arrêt d'extrémité d'au moins une section de limiteur de courbure (2) voisine.
